(19) Europäisches Patentamt
European Patent Office
Office européen des brevets

(11) **EP 3 338 563 B1**

(12) **EUROPEAN PATENT SPECIFICATION**

(45) Date of publication and mention
of the grant of the patent:
**30.01.2019 Bulletin 2019/05**

(51) Int Cl.:
*A23L 3/3544* (2006.01)      *A23L 3/358* (2006.01)
*A23B 7/154* (2006.01)      *A23B 7/157* (2006.01)

(21) Application number: **17187871.3**

(22) Date of filing: **25.08.2017**

(54) **METHOD FOR PRESERVING FRESH PRODUCE, SOLID COMPOSITION FOR APPLICATION IN A METHOD FOR PRESERVING FRESH PRODUCE AND PRESERVED FRESH PRODUCE**

VERFAHREN ZUR KONSERVIERUNG VON FRISCHEN PRODUKTEN, FESTE ZUSAMMENSETZUNG ZUR ANWENDUNG IN EINEM VERFAHREN ZUR KONSERVIERUNG VON FRISCHEN PRODUKTEN UND KONSERVIERTE FRISCHE PRODUKTE

PROCÉDÉ DE CONSERVATION D'UN PRODUIT FRAIS, COMPOSITION SOLIDE POUR UNE APPLICATION DANS UN PROCÉDÉ DE CONSERVATION D'UN PRODUIT FRAIS ET PRODUIT FRAIS CONSERVÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2016 EP 16205983**

(43) Date of publication of application:
**27.06.2018 Bulletin 2018/26**

(73) Proprietor: **Singh, Benjamin Amit**
**33615 Bielefeld (DE)**

(72) Inventor: **Singh, Benjamin Amit**
**33615 Bielefeld (DE)**

(74) Representative: **Gille Hrabal**
**Brucknerstrasse 20**
**40593 Düsseldorf (DE)**

(56) References cited:
EP-A1- 0 141 875          WO-A1-2005/023022
JP-A- S5 561 914          US-A- 5 236 617
US-A1- 2012 045 555

• CAO J DING X JIANG W LI L PAN H WANG J ET AL: "Antistaling agent, useful for preserving the freshly cut fruits, comprises alkaline formulation and water", WPI / 2017 CLARIVATE ANALYTICS,, vol. 2014, no. 71, 13 August 2014 (2014-08-13), XP002768665,
• WON J K: "Liquid composition useful for preventing browning of fruits, preferably apples, comprises mixed solution of vitamin C, potassium carbonate, and purified water", WPI / 2017 CLARIVATE ANALYTICS,, vol. 2014, no. 5, 26 December 2013 (2013-12-26), XP002768667,

**Description**

**TECHNICAL FIELD**

The present invention relates to the technical field of food preservation, in particular to the preservation of fresh produce, such as fruit and vegetables.

The invention relates to a solid composition (C), an aqueous solution of solid composition (C), a method for preserving fresh produce by applying the solution of solid composition (C), and fresh produce preserved by application of this method.

**BACKGROUND OF THE INVENTION**

Food preservation involves preventing the growth of undesired micro-organisms, slowing of oxidation, and inhibition and/or reversal of processes leading to visual deterioration, such as the browning reaction of cut fruit. There are many processes applicable to preserve food, which may involve various food preservation methods. In many processes, the character of the processed food regarding appearance and taste is fundamentally changed. In contrast to such processes, it is desirable in many cases to make food more durable and to extend its storability while preserving as many characteristics, such as flavor, texture, scent and optical appearance, as possible.

A method for the preservation of fresh produce, in particular of cut fruit and vegetables, is described in WO 2005/023022 A1 and the corresponding EP 1 659 887, which relies on a combination of a preservative cation selected from a wide range of metal ions as well as ammonium ion or mixtures thereof, and ascorbate ions or erythorbate ions dissolved in water. The solution is applied to the fresh produce to extend shelf-life, preserving the texture, flavor, appearance, crispness, and color of the fresh produce, particularly the exposed surface of the fresh produce.

The application of metal ascorbates or combinations of ascorbic acids and metal salts in treating fruit, vegetables and other foodstuff for reduction of microbial contamination, prevention of coloring and preservation is also disclosed in JP 06-181 684, EP-A-0 141 875 and WO 00/30460, which necessarily comprise ascorbic acid and/or a salt thereof, sodium carbonate and/or potassium carbonate, as well as citric acid and/or a salt thereof and a sulfite or bisulfite compound, each of them being present in an amount of 10 to 40 %.

CN 103976017 A describes an antistalling agent comprising an alkaline formulation and water, surfactants, thickening agents, humectants and an antioxidant for preserving freshly cut fruits. The alkaline component of said antistalling formulation is selected from sodium carbonate, sodium bicarbonate and/or potassium bicarbonate and the antixodant may be ascorbic acid, isoascorbic acid, sodium ascorbate and/or sodium erythorbate. Potassium carbonate is not mentioned as possible alkaline component in said antistalling formulation.

US 5,236,617 A describes an oxygen absorbent for use sealed in a pack with food to prevent the food from deteriorating. Said oxygen absorbent comprises an alkaline compound, ascorbic acid or a salt thereof, a reaction accelerator such as activated carbon or a transition metal and silica gel. The alkaline compound may be selected among carbonates and hydrogen carbonates of alkaline metals and alkaline earth metals, which generate carbonate dioxide gas according to the absorption of oxygen in the package so as to improve the preservation of a food by the action of a generated carbon dioxide gas and maintain the inner pressure of the food package. The oxygen absorbent described herein is used as a by-product co-packed in the food package for absorbing oxygen in the food package but is neither intended nor suitable for preparing a solution for direct application onto the food due to its composition, comprising activated carbon and silica gel.

JP S-5561914 A describes and the freshness keeping agent comprising an alkaline substance selected from one or more of: sodium hydroxide; potassium hydroxide; and carbonates and hydrogen carbonates of alkali metals and alkaline earth metals, e.g., alkali carbonates such as lithium carbonate and sodium carbonate, calcium carbonate, magnesium carbonate, sodium hydrogen carbonate, potassium hydrogen carbonate, lithium hydrogen carbonate, potassium sodium carbonate, and magnesium potassium carbonate, and hydrated salts thereof. Potassium carbonate is not mentioned in the application as filed. In particular, in Example 1 $NaHCO_3$ and $Na_2CO_3 \cdot 10H_2O$ are used as shown in the table 1. Further components contained in the composition of Example 1, i.e., the components listed in the table 1, are D-iso-sodium ascorbate, $CuSO_4 \cdot 5H_2O$, $CuCl_2$, $NaHCO_3$, $Na_2CO_3 \cdot 10H_2O$, $CaCl_2 \cdot 2H_2O$, activated carbon, and $FeSO_4 \cdot 7H_2O$, and the composition is packed in a small bag. Solvents, such as water, are not mentioned in the application. A specific example, comprising ascorbic acid and a potassium component is also not mentioned therein. The application states that the freshness keeping agent is used for the prevention of food deterioration due to oxygen. Thus, the freshness keeping agent appears to be a powdery composition to be applied as a by-product co-packed in the food package, similar as described in US 5,236,617 A. JP S-5561914 A was filed without Abstract, as at the time of filing no Abstract was required in Japanese practice, accordingly the intended technical reality must be drawn to the literal disclosure in the originally filed application.

EP 2 522 226 A2 describes a composition for preserving caviar from fish grown in aquaculture, the composition comprising sodium chloride, at least one alkali bicarbonate, at least one organic acid or salt thereof, such as e.g. ascorbic acid, and dihydroquercetin.

US 2012/045555 A1 relates to a fresh fruit preservative, in particular by reducing oxidation of the exposed cut surfaces of the fruit. The preservative comprises ascorbic acid, calcium ascorbate, carbohydrate, sodium chloride, magnesium chloride, potassium bicarbonate and malic acid. No specific Example composition with concretely defined amounts of the ascorbic acid and potassium bicarbonate component and thus a specific molar ratio of said compounds is disclosed therein despite a composition comprising 88 wt.-% ascorbic acid and 4.4 wt.-% potassium bicarbonate, resulting in a molar ratio of 1 : 11.37. In any case, potassium carbonate is also not mentioned therein.

KR 2013 0141017 describes liquid compositions for preventing browning of fruits, the compositions comprising 1.5 wt.-% vitamin C, 0.3 wt.-% potassium carbonate and 98.2 wt.-% water, resulting in a molar ratio of potassium cations to ascorbate anions of 1 : 1.96.

## PROBLEM TO BE SOLVED

The problem to be solved by the present invention is the provision of an improved preservation agent and an improved method for the preservation of fresh produce. In particular, it was the object of present invention to provide a new agent and a method for the preservation of fresh produce with improved performance over the so far known products and methods regarding browning inhibition and/or browning reversal, maintenance of texture and crispness as well as taste properties when being applied to fresh produce, such as in particular cut fruits and vegetables.

## DETAILED DESCRIPTION OF THE INVENTION

The present invention relates to a solid composition comprising potassium carbonate and at least one source of ascorbate and/or isoascorbate ions and optionally excipients being soluble in an aqueous solvent for application to fresh produce for preservation, such as in particular for application to fresh cut fruits and vegetables.

### Solid Composition

In a first aspect, the present invention relates to a solid composition (C) comprising potassium carbonate and at least one source of ascorbate and/or isoascorbate ions and optionally excipients.

In the solid composition (C) according to the invention, the molar ratio of potassium cations, derived from potassium carbonate as the potassium source, to ascorbate anions and/or isoascorbate anions in the solid composition is within the range from 1.00:0.95 to 1.00:0.50; more preferably 1.00:0.90 to 1.00:0.60, even more preferably 1.00:0.80 to 1.00:0.70, and most preferably 1.00:0.75 to 1.00:0.70.

In further embodiments of the solid composition (C) the molar ratio of potassium cations to ascorbate anions and/or isoascorbate anions in the solid composition is within the range from 1.00 : 0.95 to 1.00:0.60; 1.00 : 0.95 to 1.00:0.70.

In further embodiments of the solid composition (C) the molar ratio of potassium cations to ascorbate anions and/or isoascorbate anions in the solid composition is within the range from 1.00 : 0.90 to 1.00:0.50; 1.00 : 0.90 to 1.00:0.70.

In further embodiments of the solid composition (C) the molar ratio of potassium cations to ascorbate anions and/or isoascorbate anions in the solid composition is within the range from 1.00 : 0.80 to 1.00:0.50; 1.00 : 0.80 to 1.00:0.60.

In further embodiments of the solid composition (C) the molar ratio of potassium cations to ascorbate anions and/or isoascorbate anions in the solid composition is within the range from 1.00 : 0.75 to 1.00:0.50; 1.00 : 0.75 to 1.00:0.60.

In a further embodiment of the solid composition (C) the molar ratio of potassium cations to ascorbate anions and/or isoascorbate anions in the solid composition is within the range from $1.00: \leq 0.78$ to 1.00:0.50; more preferably $1.00: \leq 0.78$ to 1.00:0.60, even more preferably $1.00: \leq 0.78$ to 1.00:0.70, and most preferably $1.00: \leq 0.78$ to 1.00:0.71.

In a further embodiment of the solid composition (C) the molar ratio of potassium cations to ascorbate anions and/or isoascorbate anions in the solid composition is 1.00:0.75 to 1.00:0.70, or 1.00:0.74 to 1.00:0.71, or 1.00 to 0.73.

In further embodiments of the solid composition (C) the molar ratio of potassium cations to ascorbate anions and/or isoascorbate anions in the solid composition is 1.00 : 0.75 to 1.00:0.71; 1.00 : 0.75 to 1.00:0.73.

In further embodiments of the solid composition (C) the molar ratio of potassium cations to ascorbate anions and/or isoascorbate anions in the solid composition is 1.00 : 0.74 to 1.00:0.70; 1.00 : 0.74 to 1.00:0.73.

In the solid composition (C) according to the invention, the source of potassium ions is potassium carbonate

In the solid composition (C) according to the invention, the source of ascorbate ions and/or isoascorbate ions may be ascorbic acid or a salt thereof and/or isoascorbic acid or a salt thereof. It is also possible to use acerola as a source of ascorbate ions or any other suitable ascorbic acid (vitamin C) rich source.

If a salt of ascorbic acid and/or isoascorbic acid is used, it is preferably a metal salt of ascorbic acid or isoascorbic acid, or mixtures thereof, more preferably an alkali or earth alkali metal salt of ascorbic acid or isoascorbic acid, or mixtures thereof, most preferably potassium ascorbate or potassium isoascorbate, or mixtures thereof. The use of ascorbic acid as source of ascorbate ions is particularly preferred.

In a preferred embodiment according to the invention, a combination of potassium carbonate and ascorbic acid is used to provide the potassium cations and the ascorbate anions contained in the solid composition (C).

Optionally, the solid composition (C) according to the invention furthermore contains one or more excipients suitable for the use in food, selected from the group of antiadherents, binders, colors, flavors, lubricants, preservatives, sweeteners, such as in particular listed in governmental regulations, for example in the German Zusatzstoff-Zulassungsverordnung (ZZulV) according to the Lebensmittel- und Futtermittelgesetzbuch (LFGB), or classified as GRAS (generally recognized as safe) food substances by the FDA.

In a preferred embodiment of the invention, the solid composition (C) contains less than 30 weight-% of an excipient or excipients, more preferably less than 20 weight-%, even more preferably less than 10 weight-%, and most preferably less than 5 weight-% of excipients. According to the present invention, the term solid composition relates to a mixture of components in solid state, wherein the particle size and particle shape of each component are not limited in any way. The solids may have the form of powder, grains, granules or chunks, without being limited thereto.

In a preferred embodiment of the invention, the content of chloride-anion containing salts in the solid composition (C) is $\leq 20.0$ weight-%, preferably $\leq 10.0$ weight-%, more preferably $\leq 5$ weight-%, even more preferably $\leq 3.5$ weight-%, such as particularly preferred $< 3.5$ weight-%, more preferably $\leq 3.0$ weight-%, more preferably $\leq 2.5$ weight-%, more preferably $\leq 2.0$ weight-%, more preferably $\leq 1.5$ weight-%, more preferably $\leq 0.5$ weight-%.

In a preferred embodiment of the invention, potassium chloride and any chloride anion-containing salts are excluded from the solid composition (C).

In a further embodiment of the invention, the solid composition (C) does not contain citric acid and/or a salt thereof and/or a sulfite or bisulfite compound or metabisulfite compound.

In a further embodiment of the invention, the solid composition (C) does not contain one or more of the alkaline components such as sodium hydroxide, potassium hydroxide, sodium carbonate, lithium carbonate, calcium carbonate, magnesium carbonate, sodium hydrogen carbonate, potassium hydrogen carbonate, lithium hydrogen carbonate, potassium sodium carbonate, and magnesium potassium carbonate, or hydrated salts thereof. In a further embodiment of the invention, the solid composition (C) does not contain any further alkaline component (unless explicitly mentioned herein).

## Solution of the Solid Composition

The present invention further relates to a solution of the solid composition (C). In such solution the solid composition (C) is dissolved in a single solvent or a mixture of solvents, wherein solvents used other than water have to be water-miscible and suitable as food additives, such as e.g. approved by governmental regulations, for example in the German Zusatzstoff-Zulassungsverordnung (ZZulV) according to the Lebensmittel- und Futtermittelgesetzbuch (LFGB), or classified as GRAS (generally recognized as safe) food substances by the FDA.

Examples of such solvents are glycerol and propylene glycol, which are fully miscible with water.

The solution of the solid composition (C) is generally an aqueous solution. The most preferred solvent is water. Preferably, water is used as sole solvent to prepare a solution of solid composition (C) by dissolution of solid composition (C).

In the sense of the present invention, water includes drinking water as supplied either publically by local government authorities or privately by the food business itself.

In the solution of the solid composition (C) according to the present invention, the molar ratio of potassium cations to ascorbate anions and/or isoascorbate anions in the solution is within the range from 1.00:0.95 to 1.00:0.50; more preferably 1.00:0.90 to 1.00:0.60, even more preferably 1.00:0.80 to 1.00:0.70, and most preferably 1.00:0.75 to 1.00:0.70.

In further embodiments of the solution of the solid composition (C) the molar ratio of potassium cations to ascorbate anions and/or isoascorbate anions in the solution is within the range from 1.00 : 0.95 to 1.00:0.60; 1.00 : 0.95 to 1.00:0.70.

In further embodiments of the solution of the solid composition (C) the molar ratio of potassium cations to ascorbate anions and/or isoascorbate anions in the solution is within the range from 1.00 : 0.90 to 1.00:0.50; 1.00 : 0.90 to 1.00:0.70.

In further embodiments of the solution of the solid composition (C) the molar ratio of potassium cations to ascorbate anions and/or isoascorbate anions in the solution is within the range from 1.00 : 0.80 to 1.00:0.50; 1.00 : 0.80 to 1.00:0.60.

In further embodiments of the solution of the solid composition (C) the molar ratio of potassium cations to ascorbate anions and/or isoascorbate anions in the solution is within the range from 1.00 : 0.75 to 1.00:0.50; 1.00 : 0.75 to 1.00:0.60.

In a further embodiment of the solution of the solid composition (C) according to the invention the molar ratio of potassium cations to ascorbate anions and/or isoascorbate anions in the solution is within the range from 1.00: ≤ 0.78 to 1.00:0.50; more preferably 1.00: ≤ 0.78 to 1.00:0.60, even more preferably 1.00: ≤ 0.78 to 1.00:0.70, and most preferably 1.00: ≤ 0.78 to 1.00:0.71.

In a further embodiment of the solution of the solid composition (C) the molar ratio of potassium cations to ascorbate anions and/or isoascorbate anions in the solution is 1.00:0.75 to 1.00:0.70, or 1.00:0.74 to 1.00:0.71, or 1.00 to 0.73.

In further embodiments of the solution of the solid composition (C) the molar ratio of potassium cations to ascorbate anions and/or isoascorbate anions in the solution is 1.00 : 0.75 to 1.00:0.71; 1.00 : 0.75 to 1.00:0.73.

In further embodiments of the solution of the solid composition (C) the molar ratio of potassium cations to ascorbate anions and/or isoascorbate anions in the solution is 1.00 : 0.74 to 1.00:0.70; 1.00 : 0.74 to 1.00:0.73.

In a preferred embodiment according to the invention, the content of chloride-anion containing salts in the solution of the solid composition (C) is ≤ 3.5 weight-%, preferably below (<) 3.5 weight-%, preferably ≤ 3.0 weight-%, preferably ≤ 2.5 weight-%, more preferably ≤ 2.0 weight-%, even more preferably ≤ 1.5 weight-%, even more preferably ≤ 1.0 weight-%, and most preferably ≤ 0,5 weight-%. From the given ranges of chloride-anion containing salts in the solution the respective chloride-anion concentrations can be calculated by a skilled person. The respective chloride-anion concentrations are likewise excluded from the solution of the present invention.

In the intended use according to the present invention, the presence of chloride anions causes a salty taste, which may impair the quality of the preserved fresh produce when the chloride anion content exceeds a certain proportion of the solution of the solid composition (C).

In a preferred embodiment, potassium chloride and any chloride anion-containing salts or chloride anions are excluded from the solution of the solid composition (C) applied in the method for fresh produce preservation

Therein, traces of chloride anions stemming e.g. from drinking water or from salts other than chloride anion-containing salts (e.g. as impurities) used for the preparation of the solution of the composition (C) shall be exempted from the exclusion of potassium chloride and any chloride anion-containing salts or chloride anions in the solution of the present invention.

In the sense of the present invention, the exclusion of potassium chloride does not apply to potassium chloride generated from chloride anions present in the solvent used to prepare the solution of solid composition (C), e.g. as traces in drinking water, and potassium cations from the solid composition, having a different counter-ion in the solid composition.

In the present invention both potassium cations stemming from potassium carbonate serving as potassium ion source as well as potassium cations stemming from compounds serving as ascorbate or isoascorbate sources are considered in the determination of the ratio of potassium ions to ascorbate and/or isoascorbate ions, while potassium cations stemming from drinking water used for the preparation of the solution of the solid composition (C) are not considered in the determination of the ratio of potassium ions to ascorbate and/or isoascorbate ions.

Said solution may be present as a ready-to-use solution for preserving food as defined herein. Such ready-to-use solutions may comprise further additives in accordance with the above mentioned regulations. As suitable additive for a ready-to-use solution preservatives are mentioned.

In accordance with the further embodiments as described above, the solution of the respective solid compositions does also not contain citric acid and/or a salt thereof and/or a sulfite or bisulfite compound or metabisulfite compound.

In accordance with the further embodiments as described above, the solution of the respective solid compositions does also not contain one or more of the further alkaline component such as sodium hydroxide, potassium hydroxide, sodium carbonate, lithium carbonate, calcium carbonate, magnesium carbonate, sodium hydrogen carbonate, potassium hydrogen carbonate, lithium hydrogen carbonate, potassium sodium carbonate, and magnesium potassium carbonate, or hydrated salts thereof, or any further alkaline component (unless explicitly mentioned herein).

Similar as mentioned above, the exclusion of said components does not apply to the respective components, if generated from cations or anions present in the solvent used to prepare the solution of respective solid compositions (C), e.g. as traces in drinking water etc. or from any of the above mentioned excipients and/or additives in accordance with the above mentioned regulations.

## Use of the Solid Composition and the Solution thereof

The solid composition (C) and the solution of the solid composition according to the present invention are a composition for application in food preservation.

In the sense of the present invention, the term food preservation means measures to enhance durability and storability of food. It means to prevent the growth of micro-organisms, as well as to slow down the oxidation of food and its constituents. Food preservation also includes inhibition and/or reversal of visual deterioration, such as the enzymatic browning reaction of fruit and vegetables, especially after they are cut for food preparation, and measures to maintain the texture and flavor of food, in particular of fresh produce, as defined below.

The solid composition (C) and the solution of the solid composition according to the present invention are in particular useful for inhibiting and/or reversing visual deterioration, such as in particular enzymatic browning reactions of fruit and vegetables, especially after they are cut for food preparation.

The solid composition (C) and the solution of the solid composition according to the present invention are used for preserving food as defined herein and are thus applied in a method for preserving fresh produce as defined in detail below.

## Method for Preserving Food

The invention further relates to a method for preserving food, such as in particular fresh produce as defined above, comprising the following steps:

(a) providing a solid composition (C) according to the invention by mixing two or more compounds, including at least potassium carbonate as source of potassium cations and at least one source of ascorbate and/or isoascorbate anions, and

(b) preparing a solution of the solid composition (C) according to step (a) by dissolving the solid composition (C) in a solvent, preferably in water, or in a mixture of solvents, or

(c) alternatively, providing a ready-to-use solution of the solid composition (C) as defined in step (a), and

(d) application of the solution of step (b) or (c) to the fresh produce,

wherein

the molar ratio of potassium cations to ascorbate anions and/or isoascorbate anions in the solution of the solid composition (C) is within the range from 1.00:0.95 to 1.00:0.50; preferably 1.00:0.90 to 1.00:0.60, more preferably 1.00:0.80 to 1.00:0.70, even more preferably 1.00:0.75 to 1.00:0.70;

the source of potassium ions is potassium carbonate; and

the source of ascorbate ions and/or isoascorbate ions is ascorbic acid or a salt thereof and/or isoascorbic acid or a salt thereof or acerola or any other suitable ascorbic acid (vitamin C) rich source.

In further embodiments of the aforesaid method the molar ratio of potassium cations to ascorbate anions and/or isoascorbate anions in the solid composition is within the range from 1.00 : 0.95 to 1.00:0.60; 1.00 : 0.95 to 1.00:0.70.

In further embodiments of the aforesaid method the molar ratio of potassium cations to ascorbate anions and/or isoascorbate anions in the solid composition is within the range from 1.00 : 0.90 to 1.00:0.50; 1.00 : 0.90 to 1.00:0.70.

In further embodiments of the aforesaid method the molar ratio of potassium cations to ascorbate anions and/or isoascorbate anions in the solid composition is within the range from 1.00 : 0.80 to 1.00:0.50; 1.00 : 0.80 to 1.00:0.60.

In further embodiments of the aforesaid method the molar ratio of potassium cations to ascorbate anions and/or isoascorbate anions in the solid composition is within the range from 1.00 : 0.75 to 1.00:0.50; 1.00 : 0.75 to 1.00:0.60.

In an alternative embodiment of the aforesaid method the molar ratio of potassium cations to ascorbate anions and/or isoascorbate anions in the solution of the solid composition (C) is within the range from 1.00: $\leq$ 0.78 to 1.00:0.50; more preferably 1.00: $\leq$ 0.78 to 1.00:0.60, even more preferably 1.00: $\leq$ 0.78 to 1.00:0.70, and most preferably 1.00: $\leq$ 0.78 to 1.00:0.71.

In further embodiments of the aforesaid method the molar ratio of potassium cations to ascorbate anions and/or isoascorbate anions in the solution is 1.00:0.75 to 1.00:0.70, or 1.00:0.74 to 1.00:0.71, or 1.00 to 0.73.

In further embodiments of the aforesaid method the molar ratio of potassium cations to ascorbate anions and/or isoascorbate anions in the solution is 1.00 : 0.75 to 1.00:0.71; 1.00 : 0.75 to 1.00:0.73.

In further embodiments of the aforesaid method the molar ratio of potassium cations to ascorbate anions and/or isoascorbate anions in the solution is 1.00 : 0.74 to 1.00:0.70; 1.00 : 0.74 to 1.00:0.73.

The step (a) for providing the solid composition (C) according to the invention can be performed by mixing of the compounds constituting the solid composition (C), wherein any conventional mixing device suitable for mixing solids, such as planetary mixer, shaker-mixer, drum mixer can be used.

The step (b) for providing a solution of the solid composition (C) according to the invention can be performed immediately prior to use of the solution in step (d), or it can be performed in advance, and the solution of the solid composition (C) can be stored until it is used.

In a preferred embodiment of the method according to the invention, the solution applied for the preservation of fresh produce contains 90.0 to 98.0 weight-% of water, more preferred 92.0 to 96.0 weight-% of water, even more preferred 93.0 to 95.0 weight-% of water and most preferred 93.5 to 94.5 weight-% of water.

In a preferred embodiment of the method for preserving fresh produce according to the invention, the solution of the solid composition (C) contains 0.01 to 5.0 weight-% of potassium ions, more preferably 0.2 to 4.0 weight-%, even more preferably 0.75 to 2.5. weight-%, and most preferably 1.0 to 1.5 weight-% of potassium ions.

In a preferred embodiment of the method for preserving fresh produce according to the invention, the solution of the solid composition (C) contains 0.01-10.0 weight-% of ascorbate or isoascorbate ions, more preferably 1.0 to 8.0 weight-%, even more preferably 2.5 to 6.0 weight-%, and most preferably 3.5 to 4.5 weight-% of ascorbate or isoascorbate ions. If acerola or any other suitable ascorbic acid (vitamin C) rich source is used, the amounts thereof are calculated respectively to provide the above mentioned amounts of ascorbate or isoascorbate ions.

It is further preferred, that the pH value of the solution of the solid composition (C) according to the present invention is within the range from 5.0 to 9.0, more preferably from 5.5 to 8.5, even more preferred from 6.0 to 8.0, and most preferred from 6.5 to 7.5.

Particularly preferred is a pH neutral solution , in particular over acidic and strongly acidic solutions.

In the sense of the present invention, the pH value of the solution is measured with common laboratory pH meter for aqueous solutions at room temperature (20 °C $\pm$ 5 °C), making use of electrochemical determination of pH value.

In a preferred embodiment of the invention, the solution of the solid composition (C) is applied to the fresh produce by spraying, sprinkling, dousing, dipping or immersion, which corresponds to step (d) of the method described above.

The term spraying according to the invention relates to any technical process in which an aerosol is created and aimed at the fresh produce to be conserved. This may be by a pump spray system or a propellant-based spray system. The droplet size of the solution of the solid composition (C) is not limited to any size range, but preferably the droplets are of microscopic size.

The term sprinkling according to the invention relates to any technical process in which drops and/or droplets of the solution of the solid composition (C) are sprinkled onto the fresh produce, for instance by a sprinkler system.

The term dousing according to the invention relates to any technical process in which the solution of the solid composition (C) is doused or poured onto the fresh produce.

The technical processes referred to as spraying, sprinkling or dousing can be applied to the fresh produce being positioned on a grid, in a tray or on a conveyor belt, but are in no way restricted by these modes of application.

The terms dipping and immersion according to the invention relate to any technical process in which the fresh produce is brought into a reservoir of the solution of the solid composition (C) in a way providing that its entire surface is at least temporarily covered by the solution, or in a way that the fresh produce is floating on the surface of the solution of solid composition (C).

Furthermore, any other means suitable for covering the surface of the fresh produce to be preserved with the solution of solid composition (C) can be applied in the method according to the invention.

In the sense of the present invention the term "food" relates to any food which may be prone to oxidation. The invention particularly relates to fresh food, more particularly to fresh produce.

In the sense of present invention, the term "fresh produce" principally comprises fresh fruit and vegetables. Primarily, but not exclusively, such fresh fruit and vegetables are farm-grown.

In the sense of present invention, the term "fresh produce" also implies that the fruits and vegetables are either in the same state as they were harvested, or have been peeled, sliced, chopped or submitted to any means for reducing size or providing bite-size portions of fruits and vegetables, such as slicing, chopping, cutting or peeling.

The present invention particularly relates to the application of the solid composition (C), in particular in the form of its solution, to fresh fruit and vegetables, in particular to apples, pears, potatoes, carrots, lettuce, avocados, leeks, rhubarb, onions, basil, melons, pineapple, eggplant, rutabaga, kale, cherries, strawberries, mushrooms, nectarines, peaches, kiwi, garlic, peppers, tomatoes fennel, lemons, oranges, apricot, asparagus, beans, peas, broccoli, cauliflower, Brussel sprouts, cabbage, celery, chard, corn, endive, herbs, okra, dragon fruit, parsley, chili, beetroot, turnip, ginger, radish, squashes, courgette, pumpkin, artichoke, sweet potato, zucchini and watercress.

Preferably the solid composition (C), in particular in the form of its solution is applied to apples, pears, potatoes, carrots, avocados, leeks, rhubarb, onions, melons, pineapple, eggplant, rutabaga, kale mushrooms, nectarines, peaches, kiwi, garlic, peppers, tomatoes fennel, lemons, oranges, apricot, asparagus, broccoli, cauliflower, parsley, chili, beetroot, turnip, ginger, radish, squashes, courgette, pumpkin, artichoke, sweet potato and zucchini.

The application to pears and apples is even more preferred, most preferred is the application to apples.

In the sense of present invention, fresh produce taxonomically belonging to funghi, such as champignons, mu err, porcino, chanterelle and any other mushrooms, are considered to be comprised by the term vegetables.

The invention further relates to fresh produce preserved by application of the composition of the present invention and/or by carrying out the method for preserving food according to the present invention, such as in particular fresh produce, preserved by application of the solution of the present invention or by the method according to the invention, selected from the group consisting of apples, pears, potatoes, carrots, lettuce, avocados, leeks, rhubarb, onions, basil, melons, pineapple, eggplant, rutabaga, kale, cherries, strawberries, mushrooms, nectarines, peaches, kiwi, garlic, peppers, tomatoes fennel, lemons, oranges, apricot, asparagus, beans, peas, broccoli, cauliflower, Brussel sprouts, cabbage, celery, chard, corn, endive, herbs, okra, dragon fruit, parsley, chili, beetroot, turnip, ginger, radish, squashes, courgette, pumpkin, artichoke, sweet potato, zucchini and watercress.

## DESCRIPTION OF THE FIGURES

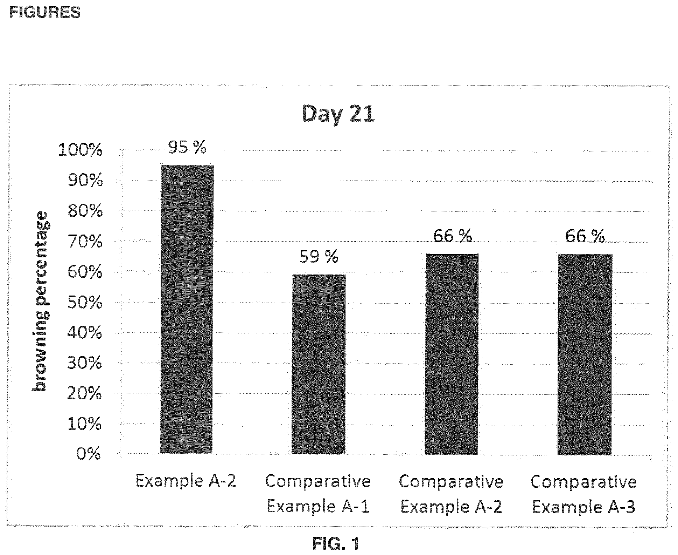

Fig. 1: Bar graph displaying browning percentage of Example A-2 and Comparative Examples A-1, A-2 and A-3 after 21 days

## EXAMPLES

The present invention is further illustrated by the following examples, without being limited thereto.

## A. Evaluation of the Browning Percentage of Fresh Cut Apples after 21 Days Storage

### Example A-1:Solid composition (C)

63 g of potassium carbonate (Food Grade, granular from Altair Chimica S.p.A.) and 117 g of ascorbic acid (Ph. Eur. Grade, DSM Nutritional Products Ltd.) were thoroughly mixed to provide the solid composition (C).

### Example A-2: Solution of Solid Composition (C)

The dry mixture according to Example A-1 was dissolved in 3 liter of drinking water to provide a solution of the solid composition according to Example 1.

### Example A-3: Solution of Solid Composition (C)

63 g of potassium carbonate and 117 g of ascorbic acid were mixed with 2820 g of water to prepare a 6% solution (w/w).

### Example A-4: Solution of Solid Composition (C):

63 g of potassium carbonate and 117 g of ascorbic acid were topped off with water until the solution level reached 3000 ml to make a 6% solution (w/v).

### Comparative Example A-1:

15.9 g of potassium carbonate (Food Grade, granular from Altair Chimica S.p.A.) and 40 g of ascorbic acid (Ph. Eur. Grade, DSM Nutritional Products Ltd.) were thoroughly mixed to provide a comparative solid composition.
167,7 g of the comparative solid composition as described above were dissolved in 2832,30 g water. Thus, a preservative solution of the comparative solid composition containing 4.0 weight-% (w/w) of ascorbic acid and 1.59 weight-% (w/w) of $K_2CO_3$ was obtained.

### Comparative Example A-2:

35g of potassium chloride (Ph. Eur. Grade, Dr. Lohmann Diaclean GmbH) and 65 g of ascorbic acid (Ph. Eur. Grade, DSM Nutritional Products Ltd. were thoroughly mixed to provide a comparative solid composition.
300 g of the comparative solid composition obtained as described above were dissolved in 2700 g water. Thus, a preservative solution of the comparative solid composition containing 6.5 weight-% of ascorbic acid and 3.5 weight-% of KCl was obtained.

### Comparative Example A-3:

11 g of potassium hydrogen carbonate (Ph. Eur. Grade, crystalline, Caesar & Loretz GmbH) and 40 g of ascorbic acid (Ph. Eur. Grade, DSM Nutritional Products Ltd.) were thoroughly mixed.
153 g of the comparative solid composition obtained as described above were dissolved in 2847 g water. Thus, a preservative solution of the comparative solid composition containing 4.0 weight-% of ascorbic acid and 1.1 weight-% of $KHCO_3$ was obtained.

**Application Test on cut Jonagold apples (wedges)**

Tested compositions:

Solution according to Example A-2 and Comparative Examples A-1, A-2 and A-3

In each treatment, Jonagold apples were rinsed with water and cut into wedges using 19 mm NEMCO corer (55550-8C). Within 30 seconds the thus obtained wedges were dipped into a preservative solution for 2 minutes in a vessel in which dipping is performed, then the wedges were removed from the solution and stored in standard clam shell packages (Inline Plastics Corp, Safe-T-Fresh®) at a storage temperature of 4 - 6 °C (in a stainless steel refrigerator).

21 days after production, the browning percentage (browning %) of the samples of each treatment was evaluated. Therein, the browning percentage indicates the proportion of apple slices without browning. This means that a higher browning percentage constitutes a better anti-browning performance.

The browning percentage is determined by the equation (I):

$$100 - \left( \frac{\text{number of apple pieces affected by browning}}{\text{total number of apple pieces}} \right) \times 100 = \text{browning percentage [\%]}$$

$$(I)$$

The results of the browning percentages are shown in the following Table 1 and in Figure 1

Table 1:

| Experiment | | Example A-2 | Comparative Example A-1 | Comparative Example A-2 | Comparative Example A-3 |
|---|---|---|---|---|---|
| Components | Ascorbic acid | 3.9 weight-% | 4.0 weight-% | 6.5 weight-% | 4.0 weight-% |
| | $K_2CO_3$ | 2.1 weight-% | 1.59 weight-% | - | - |
| | KCl | - | - | 3.5 weight-% | - |
| | $KHCO_3$ | - | - | - | 1.1 weight-% |
| Solvent | | water | water | water | water |
| | After 21 days | 95 % | 59 % | 66 % | 66 % |

**B. Evaluation of the Browning Percentage of Fresh Cut Apples after 14 Days Storage**

Similar as in Example A above, Jonagold apples were rinsed with water and cut into wedges using 19 mm NEMCO corer (55550-8C). Within 30 seconds the thus obtained wedges were dipped into the preservative solutions as shown in Table 2 below for 2 minutes in a vessel in which dipping is performed, then the wedges were removed from the solution and stored in standard clam shell packages (Inline Plastics Corp, Safe-T-Fresh®) at a storage temperature of 4 - 6 °C (in a stainless steel refrigerator).

For each test solution as shown in Table 2 below 16 apples were cut into 8 regular wedges. After application of the respective test solution, about 500 g of the regularly cut pieces, treated with the respective test solution, were put into a polymer bag and sealed as described in Example A above.

14 days after preparation of the test samples, the browning percentage (browning %) of the samples of each treatment was evaluated and determined by the equation (I) above.

| | Example B-1 | Example B-2 | Example B-3 | Comparative Example B-1 | Comparative Example B-2 | Comparative Example B-3 | Comparative Example B-4 | Comparative Example B-5 | Comparative Example B-6 |
|---|---|---|---|---|---|---|---|---|---|
| Note: | present invention (lower range) | present invention | present invention (upper range) | $KHCO_3$ instead of $K_2CO_3$ | similar amount of ascorbic acid | CN103976017 (Example 7) | CN103976017 (Example 7) | JP S-5561914 (Tab 1E) | similar to Comp. Exp. B-5 with $K_2CO_3$ |
| Final concentration of the solid composition (C) in the solution [wt.-%] | 6% | 6% | 6% | 6% | 6% | 8,32% | 8,32% | 11,70% | 12,20% |
| Mol ratio K/Na : Asc. | 1 : 0,50 | 1 : 0,73 | 1 : 0,95 | 1 : 0,73 | 1 : 1,06 | 1 : 0,57 | 1 : 0,51 | 1 : 0,18 | 1 : 0,18 |
| Ascorbic acid | 33,6 g | 39 g | 43,6 g | 33,6 g | 39 g | 41,60 g | | 39 g | 39 g |
| $K_2CO_3$ | 26,4 g | 21 g | 17,4 g | | | | | | 83 g |
| $KHCO_3$ | | | | 26,4 g | 21 g | 41,60 g | 41,60 g | | |
| Na.Asc. | | | | | | | 41,60 g | | |
| $Na_2CO_3$ | | | | | | | | 39 g | |
| $NaHCO_3$ | | | | | | | | 39 g | |
| total amount of solid composition (C) oer 1 L | 60 g | 60 g | 60 g | 60 g | 60 g | 83,2 g | 83,2 g | 117 g | 122 g |
| Day 1 — brown pieces | 38 | 30 | 40 | 61 | 66 | 43 | 42 | 41 | 53 |
| Day 1 — browning percentage | 70,3 | 76,6 | 68,8 | 52,3 | 48,4 | 66,4 | 67,2 | 68,0 | 58,6 |
| Day 14 — brown pieces | 36 | 27 | 39 | 55 | 53 | 43 | 46 | 128 | 128 |
| Day 14 — browning percentage | 71,9 | 78,9 | 69,5 | 57,0 | 58,6 | 66,4 | 64,1 | 0,0 | 0,0 |

Examples B-1, B-2 and B-3 according to the present invention show the best results with the lowest amount of brown test pieces and thus the lowest browning percentage compared in the same measurement interval, in particular after storage for 14 days.

Although, the Example solutions of the present invention as well as some of the Comparative Examples achieve a reversal of visual deterioration, such as the enzymatic browning, which can be seen in the reduced amount of brown pieces on day 14 compared to day 1, in the overall result the Example solutions according to the present invention achieve the best browning percentages with the lowest amount of brown test pieces.

Comparing Example B-2 according to the present invention with Comparative Example B-1, having the same molar ratio of potassium : ascorbate ions but having been prepared with $KHCO_3$ (potassium bicarbonate) instead of $K_2CO_3$, it surprisingly turns out that significantly more browning occurs on Day 1 as well as after storage for 14 days. This leads to the conclusion, that the specific selection of potassium carbonate as the potassium source in the preservative composition of the present invention surprisingly achieves superior preservation effects.

Further, when comparing Example B-2 according to the present invention with Comparative Example B-2, comprising the same amounts of the antioxidant component ascorbic acid (39 g), it turns out that the improvements achieved with the Example solution B-2 compared to the solution of Comparative Example B-1 cannot result from the higher amount of the antioxidant component ascorbic acid (39 g in Example B-1 vs. 33.6 g in Comparative Example B-1). This is also surprising as it could have been expected, that the amount of antioxidant component, i.e. the ascorbic acid, would be responsible for the anti-browning effect as the browning is known to result from oxidation reactions in the fresh fruit.

Comparative Examples B-3 and B-4 show the results of a preservative solution according to the prior art as described in Example 7 of CN 103976017 A. Therein, potassium bicarbonate is used instead of potassium carbonate and although the molar ratio is within the lower range of the present invention the anti-browning effects are inferior compared to the Example solution B-1, having a similar molar ratio in the lower range of the present invention but having been prepared with potassium carbonate. This also supports the surprising findings that the specific selection of potassium carbonate as the potassium source in the preservative composition of the present invention achieves superior preservation effects.

Comparative Example B-5 shows the results by preparing an aqueous solution for application in accordance with the method of the present invention with a solid composition similar to a composition as disclosed in Table 1E of JP S-5561914 A, i.e. a composition comprising as the alkaline component sodium bicarbonate and sodium carbonate and as the antioxidant isoascorbic acid, each in equal amounts (wt.-parts). In a respective composition the molar ratio of sodium cations : ascorbate anions is 1 : 0.18 and thus far below the lowest range according to the present invention. However, the tested composition comprises the same amount of the antioxidant compound (39 g ascorbic acid) as in Example B-2 and an even higher amount of the antioxidant compound as in Example B-1 (33.6 g ascorbic acid) according to the present invention and nevertheless is significantly inferior in its preservation capacity, in particular after storage for 14 days. This supports the above described surprising findings regarding the expected influence of the antioxidant component.

Comparative Example B-6 has been carried out with a solution similar to the solution of Comparative Example B-5 but with potassium carbonate (in accordance with the present invention) instead of sodium carbonate and sodium bicarbonate. Despite the similar high amount of antioxidant ascorbic acid (39 g, as used in Example B-2) the anti-browning effects are worse, which probably results from the molar ratio of potassium cations : ascorbate anions far below the lower range of the present invention.

These experiments surprisingly show, that the specific selection of potassium carbonate as potassium source in a composition for preserving fresh cut food comprising an ascorbic acid component as an antixodant in combination with a specifically selected range of the molar ratio of potassium cations : ascorbate anions provides a new composition with surprisingly improved preservation effects.

**Claims**

1. Solid composition (C) for the preparation of an aqueous solution for application on fresh produce, the solid composition comprising potassium carbonate and at least one source of ascorbate and/or isoascorbate ions and optionally excipients, wherein the molar ratio of potassium cations to ascorbate anions and/or isoascorbate anions in the solid composition is within the range from 1.00 : 0.95 to 1.00 : 0.50; preferably 1.00: $\leq$ 0.78 to 1.00 : 0.5;
the source of ascorbate ions and/or isoascorbate ions is ascorbic acid or a salt thereof and/or isoascorbic acid or a salt thereof or acerola or any other suitable ascorbic acid rich source.

2. The solid composition (C) according to claim 1, wherein the content of chloride-anion containing salts is $\leq$ 20 weight-%, preferably $\leq$ 10 weight-%, preferably $\leq$ 5 weight-%, preferably $\leq$ 2.5 weight-%, preferably $\leq$ 0.5 weight-%, more preferably the content of chloride-anions is 0.0 weight-%.

3. The solid composition (C) according to any one of the preceding claims, which does not contain citric acid and/or a salt thereof and/or a sulfite or bisulfite compound or metabisulfite compound.

4. The solid composition (C) according to any one of the preceding claims, which further contains one or more excipients suitable for the use in food.

5. An aqueous solution comprising the solid composition (C) according to any one of the preceding claims in a solvent, preferably in water, wherein the molar ratio of potassium cations to ascorbate anions and/or isoascorbate anions in the solution is within the range from 1.00:0.95 to 1.00:0.50.

6. The solution according to claim 5, which contains 90.0 to 98.0 weight-% of water, more preferred 92.0 to 96.0 weight-% of water, even more preferred 93.0 to 95.0 weight-% of water and most preferred 93.5 to 94.5 weight-% of water.

7. The solution according to claim 5 or 6, which contains
0.01 to 5.0 weight-% of potassium ions and
0.01-10.0 weight-% of ascorbate or isoascorbate ions.

8. The solution according to any one of claims 5 to 7, having a pH value within the range from 5.0 to 9.0, more preferably from 5.5 to 8.5, even more preferred from 6.0 to 8.0, and most preferred from 6.5 to 7.5.

9. Use of the solid composition (C) according to any of claims 1 to 4 or the solution according to any one of claims 5 to 8 for preserving food, in particular fresh produce.

10. The use according to claim 9 for preserving food, in particular fresh produce, by direct application of the solution to the fresh produce.

11. Method for preserving fresh produce comprising the following steps:

(a) providing a solid composition (C) as defined in any of the preceding claims 1 to 4 by mixing potassium carbonate and at least one source of ascorbate and/or isoascorbate anions, and optionally additional excipients suitable for the use in food; and
(b) preparing a solution of the solid composition (C) according to step (a) by dissolving the solid composition (C) in a solvent, preferably in water, or in a mixture of solvents; or
(c) alternatively, providing a ready-to-use solution of the solid composition (C) as defined in step (a) or in any one of claims 5 to 8, and
(d) application of the solution of step (b) or (c) onto the fresh produce,

wherein
the molar ratio of potassium cations to ascorbate anions and/or isoascorbate anions in the solution of the solid composition (C) is within the range from 1.00:0.95 to 1.00:0.50; preferably 1.00 : ≤ 0.78 to 1.00 : 0.5;
the source of ascorbate ions and/or isoascorbate ions is ascorbic acid or a salt thereof and/or isoascorbic acid or a salt thereof, or acerola or any other suitable ascorbic acid (vitamin C) rich source; and wherein
potassium cations stemming from drinking water used for the preparation of the solution of the solid composition (C) are not considered in the determination of the ratio of potassium ions to ascorbate and/or isoascorbate ions.

12. The method according to claim 11, wherein the content of chloride-anion containing salts in the solution of the solid composition is < 3.5 weight-%, preferably ≤ 2.5 weight-%, preferably ≤ 2 weight-%, preferably ≤ 1 weight-%, preferably ≤ 0,5 weight-%, more preferably the content of chloride-anion containing salts in the solution of the solid composition is 0.0 weight-%, wherein chloride anions stemming from drinking water used for the preparation of the solution of the solid composition (C) are exempted from the exclusion.

13. The method according to claim 11 or 12, wherein the solution of the solid composition (C) is applied to the fresh produce by spraying, sprinkling, dousing, dipping or immersion.

14. The method according to any of claims 11 to 13, wherein the solution of the solid composition (C) is applied to fresh fruit and vegetables, comprising apples, pears, potatoes, carrots, lettuce, avocados, leeks, rhubarb, onions, basil, melons, pineapple, eggplant, rutabaga, kale, cherries, strawberries, mushrooms, nectarines, peaches, kiwi, garlic, peppers, tomatoes fennel, lemons, oranges, apricot, asparagus, beans, peas, broccoli, cauliflower, Brussel sprouts, cabbage, celery, chard, corn, endive, herbs, okra, dragon fruit, parsley, chili, beetroot, turnip, ginger, radish, squashes, courgette, pumpkin, artichoke, sweet potato, zucchini and watercress.

15. Fresh produce, preserved by application of the solution according to any of the claims 5 to 8 or by the method according to any of the claims 11 to 14, wherein the fresh produce is selected from the group consisting of apples, pears, potatoes, carrots, lettuce, avocados, leeks, rhubarb, onions, basil, melons, pineapple, eggplant, rutabaga, kale, cherries, strawberries, mushrooms, nectarines, peaches, kiwi, garlic, peppers, tomatoes fennel, lemons, oranges, apricot, asparagus, beans, peas, broccoli, cauliflower, Brussel sprouts, cabbage, celery, chard, corn, endive, herbs, okra, dragon fruit, parsley, chili, beetroot, turnip, ginger, radish, squashes, courgette, pumpkin, artichoke, sweet potato, zucchini and watercress.

**Patentansprüche**

1. Feste Zusammensetzung (C) für die Herstellung einer wässrigen Lösung zum Aufbringen auf Frischware, wobei die feste Zusammensetzung Kaliumcarbonat und mindestens eine Quelle von Ascorbat- und/oder Isoascorbat-Ionen und optional Hilfsstoffe umfasst, worin das Molverhältnis von Kalium-Kationen zu Ascorbat-Anionen und/oder Isoascorbat-Anionen in der festen Zusammensetzung im Bereich von 1,00 : 0,95 bis 1,00 : 0,50 liegt;
vorzugsweise im Bereich von 1,00 : ≤ 0,78 bis 1,00 : 0,5;
die Quelle der Ascorbat-Ionen und/oder Isoascorbat-Ionen Ascorbinsäure oder ein Salz davon und/oder Isoascorbinsäure oder ein Salz davon oder Acerola oder eine andere geeignete Ascorbinsäure-reiche Quelle ist.

2. Die feste Zusammensetzung (C) gemäß Anspruch 1, worin der Gehalt an Salzen die Chlorid-Anion enthalten ≤ 20 Gew.-% ist, vorzugsweise ≤ 10 Gew.-%, vorzugsweise ≤ 5 Gew.-%, vorzugsweise ≤ 2,5 Gew.-%, vorzugsweise ≤ 0,5 Gew.-%, noch bevorzugter ist der Gehalt an Chlorid-Anionen 0,0 Gew.-%.

3. Die feste Zusammensetzung (C) nach einem der vorstehenden Ansprüche, die keine Zitronensäure und/oder ein Salz davon und/oder eine Sulfit- oder Bisulfit-Verbindung oder Metabisulfit-Verbindung enthält.

4. Die feste Zusammensetzung (C) nach einem der vorstehenden Ansprüche, die außerdem einen oder mehrere für die Verwendung in Lebensmitteln geeignete Hilfsstoffe enthält.

5. Eine wässrige Lösung umfassend die feste Zusammensetzung (C) nach einem der vorstehenden Ansprüche in einem Lösungsmittel, vorzugsweise in Wasser, worin das Molverhältnis von Kalium-Kationen zu Ascorbat-Anionen und/oder Isoascorbat-Anionen in der Lösung im Bereich von 1,00 : 0,95 bis 1,00 : 0,50 liegt.

6. Die Lösung nach Anspruch 5, die 90,0 bis 98,0 Gew.-% Wasser enthält, bevorzugter 92,0 bis 96,0 Gew.-% Wasser, noch bevorzugter 93,0 bis 95,0 Gew.-% Wasser und am meisten bevorzugt 93,5 bis 94,5 Gew.-% Wasser.

7. Die Lösung nach Anspruch 5 oder 6, die
0,01 bis 5,0 Gew.-% Kalium-Kationen und
0,01 bis 10,0 Gew.-% Ascorbat- oder Isoascorbat-Ionen enthält.

8. Die Lösung nach einem der Ansprüche 5 bis 7 mit einem pH-Wert im Bereich von 5,0 bis 9,0, bevorzugter von 5,5 bis 8,5, noch bevorzugter von 6,0 bis 8,0, und am meisten bevorzugt von 6,5 bis 7,5.

9. Verwendung der festen Zusammensetzung (C) nach einem der Ansprüche 1 bis 4 oder der Lösung nach einem der Ansprüche 5 bis 8 zur Konservierung von Lebensmitteln, insbesondere Frischware.

10. Die Verwendung nach Anspruch 9 zur Konservierung von Lebensmitteln, insbesondere Frischware, durch direktes Aufbringen der Lösung auf die Frischware.

11. Verfahren zur Konservierung von Frischware umfassend die folgenden Schritte:

(a) Bereitstellen einer festen Zusammensetzung (C) wie in einem der vorstehenden Ansprüche 1 bis 4 definiert durch Mischen von Kaliumcarbonat und mindestens einer Quelle von Ascorbat- und/oder Isoascorbat-Anionen, und optional zusätzlichen für die Verwendung in Lebensmitteln geeigneten Hilfsstoffen; und

(b) Herstellen einer Lösung der festen Zusammensetzung (C) gemäß Schritt (a) durch Lösen der festen Zusammensetzung (C) in einem Lösungsmittel, vorzugsweise in Wasser, oder in einer Mischung von Lösungsmitteln; oder

(c) alternativ, Bereitstellen einer gebrauchsfertigen Lösung der festen Zusammensetzung (C) gemäß Schritt (a) oder wie in einem der Ansprüche 5 bis 8 definiert, und

(d) Aufbringen der Lösung von Schritt (b) oder (c) auf die Frischware,

worin

das Molverhältnis von Kalium-Kationen zu Ascorbat-Anionen und/oder Isoascorbat-Anionen in der Lösung der festen Zusammensetzung (C) im Bereich von 1,00 : 0,95 bis 1,00 : 0,50 liegt; vorzugsweise im Bereich von 1,00 : ≤ 0,78 bis 1,00 : 0,5;

die Quelle von Ascorbat-Ionen und/oder Isoascorbat-Ionen Ascorbinsäure oder ein Salz davon und/oder Isoascorbinsäure oder ein Salz davon, oder Acerola oder eine andere geeignete Ascorbinsäure (Vitamin C)- reiche Quelle ist; und worin

Kalium-Kationen, die aus dem Trinkwasser stammen, das für die Herstellung der Lösung der festen Zusammensetzung (C) genutzt wird, bei der Bestimmung des Verhältnisses von Kaliumionen zu Ascorbat und/oder Isoascorbat-Ionen nicht berücksichtigt werden.

12. Das Verfahren nach Anspruch 11, worin der Gehalt an Salzen die Chlorid-Anion enthalten in der Lösung der festen Zusammensetzung < 3,5 Gew.-% beträgt, vorzugsweise ≤ 2,5 Gew.-%, vorzugsweise ≤ 2 Gew.-%, vorzugsweise ≤ 1 Gew.-%, vorzugsweise ≤ 0,5 Gew.-%, noch bevorzugter ist der Gehalt an Salzen die Chlorid-Anion enthalten in der Lösung der festen Zusammensetzung (C) 0,0 Gew.-%, wobei Chlorid-Anionen, die aus dem Trinkwasser stammen, das für die Herstellung der Lösung der festen Zusammensetzung (C) genutzt wird, von dem Ausschluss ausgenommen sind.

13. Das Verfahren nach Anspruch 11 oder 12, worin die Lösung der festen Zusammensetzung (C) auf die Frischware durch Sprühen, Tropfen, Begießen, Tauchen oder Einlegen aufgebracht wird.

14. Das Verfahren nach einem der Ansprüche 11 bis 13, worin die Lösung der festen Zusammensetzung (C) auf frische Früchte und Gemüse aufgebracht wird, umfassend Äpfel, Birnen, Kartoffeln, Karotten, Salat, Avocados, Porree, Rhabarber, Zwiebeln, Basilikum, Melonen, Ananas, Auberginen, Kohlrüben, Grünkohl, Kirschen, Erdbeeren, Pilze, Nektarinen, Pfirsiche, Kiwi, Knoblauch, Paprikaschoten, Tomaten, Fenchel, Zitronen, Orangen, Aprikosen, Spargel, Bohnen, Erbsen, Brokkoli, Blumenkohl, Rosenkohl, Kohl, Sellerie, Mangold, Mais, Endivie, Kräuter, Okra, Drachenfrucht, Petersilie, Chili, Rote Beete, Rübe, Ingwer, Rettich, Kürbisse, Zucchini, Artischocken, Süßkartoffeln, und Brunnenkresse.

15. Frischware, konserviert durch Aufbringen der Lösung nach einem der Ansprüche 5 bis 8 oder durch das Verfahren nach einem der Ansprüche 11 bis 14, worin die Frischware ausgewählt ist aus der Gruppe bestehend aus Äpfeln, Birnen, Kartoffeln, Karotten, Salat, Avocados, Porree, Rhabarber, Zwiebeln, Basilikum, Melonen, Ananas, Auberginen, Kohlrüben, Grünkohl, Kirschen, Erdbeeren, Pilzen, Nektarinen, Pfirsichen, Kiwi, Knoblauch, Paprikaschoten, Tomaten, Fenchel, Zitronen, Orangen, Aprikosen, Spargel, Bohnen, Erbsen, Brokkoli, Blumenkohl, Rosenkohl, Kohl, Sellerie, Mangold, Mais, Endivie, Kräuter, Okra, Drachenfrucht, Petersilie, Chili, Rote Beete, Rübe, Ingwer, Rettich, Kürbissen, Zucchini, Artischocken, Süßkartoffeln, und Brunnenkresse.

**Revendications**

1. Composition solide (C) pour la préparation d'une solution aqueuse à appliquer sur un produit frais, la composition solide comprenant du carbonate de potassium et au moins une source d'ions ascorbate et/ou isoascorbate et éventuellement des excipients, dans laquelle

le rapport molaire des cations potassium sur les anions ascorbate et/ou les anions isoascorbate dans la composition solide se trouve dans la plage allant de 1,00 : 0,95 à 1,00 : 0,50 ; de préférence allant de 1,00 : ≤ 0,78 à 1,00 : 0,5 ;

la source d'ions ascorbate et/ou d'ions isoascorbate est l'acide ascorbique ou un sel de celui-ci et/ou l'acide isoascorbique ou un sel de celui-ci ou de l'acérola ou toute autre source appropriée riche en acide ascorbique.

2. Composition solide (C) selon la revendication 1, dans laquelle la teneur en sels contenant des anions chlorure est ≤ 20% en poids, de préférence ≤ 10% en poids, de préférence ≤ 5% en poids, de préférence ≤ 2,5% en poids, de préférence ≤ 0,5% en poids, plus préférablement, la teneur en anions chlorure est de 0,0% en poids.

3. Composition solide (C) selon l'une quelconque des revendications précédentes, qui ne contient pas d'acide citrique et/ou un sel de celui-ci et/ou un composé de sulfite ou de bisulfite ou un composé de métabisulfite.

4. Composition solide (C) selon l'une quelconque des revendications précédentes, qui contient en outre un ou plusieurs excipient(s) approprié(s) pour l'utilisation dans un aliment.

5. Solution aqueuse comprenant la composition solide (C) selon l'une quelconque des revendications précédentes dans un solvant, de préférence dans de l'eau, dans laquelle le rapport molaire des cations potassium sur les anions ascorbate et/ou les anions isoascorbate dans la solution se trouve dans la plage allant de 1,00 : 0,95 à 1,00 : 0,50.

6. Solution selon la revendication 5, qui contient 90,0 à 98,0% en poids d'eau, plus préférablement 92,0 à 96,0% en poids d'eau, encore plus préférablement 93,0 à 95,0% en poids d'eau et idéalement 93,5 à 94,5% en poids d'eau.

7. Solution selon la revendication 5 ou 6, qui contient
0,01 à 5,0% en poids d'ions potassium et
0,01 à 10,0% en poids d'ions ascorbate ou isoascorbate.

8. Solution selon l'une quelconque des revendications 5 à 7, ayant une valeur de pH se trouvant dans la plage allant de 5,0 à 9,0, plus préférablement allant de 5,5 à 8,5, encore plus préférablement allant de 6,0 à 8,0 et idéalement allant de 6,5 de 7,5.

9. Utilisation de la composition solide (C) selon l'une des revendications 1 à 4 ou de la solution selon l'une quelconque des revendications 5 à 8 pour conserver un aliment, en particulier un produit frais.

10. Utilisation selon la revendication 9 pour conserver un aliment, en particulier un produit frais, par application directe de la solution au produit frais.

11. Procédé de conservation de produit frais comprenant les étapes suivantes qui consistent :

(a) à fournir une composition solide (C) telle que définie dans l'une des revendications précédentes 1 à 4 en mélangeant du carbonate de potassium et au moins une source d'anions ascorbate et/ou isoascorbate, et éventuellement des excipients supplémentaires appropriés pour l'utilisation dans un aliment ; et
(b) à préparer une solution de la composition solide (C) selon l'étape (a) en dissolvant la composition solide (C) dans un solvant, de préférence dans de l'eau, ou dans un mélange de solvants ; ou
(c) en variante, à fournir une solution prête à l'emploi de la composition solide (C) telle que définie dans l'étape (a) ou dans l'une quelconque des revendications 5 à 8, et
(d) à appliquer la solution de l'étape (b) ou (c) sur le produit frais,

dans lequel
le rapport molaire des cations potassium sur les anions ascorbate et/ou les anions isoascorbate dans la solution de la composition solide (C) se trouve dans la plage allant de 1,00 : 0,95 à 1,00 : 0,50 ; de préférence allant de 1,00 : ≤ 0,78 à 1,00 : 0,5 ;
la source d'ions ascorbate et/ou d'ions isoascorbate est l'acide ascorbique ou un sel de celui-ci et/ou l'acide isoascorbique ou un sel de celui-ci, ou de l'acérola ou toute autre source appropriée riche en acide ascorbique (vitamine C); et où
les cations potassium provenant de l'eau potable utilisés pour la préparation de la solution de la composition solide (C) ne sont pas pris en compte dans la détermination du rapport des ions potassium sur les ions ascorbate et/ou isoascorbate.

12. Procédé selon la revendication 11, dans lequel la teneur en sels contenant des anions chlorure dans la solution de la composition solide est < 3,5% en poids, de préférence ≤ 2,5% en poids, de préférence ≤ 2% en poids, de préférence ≤ 1% en poids, de préférence ≤ 0,5% en poids, plus préférablement la teneur en sels contenant des anions chlorure dans la solution de la composition solide est de 0,0% en poids, où les anions chlorure provenant de l'eau potable utilisés pour la préparation de la solution de la composition solide (C) sont exemptés de l'exclusion.

13. Procédé selon la revendication 11 ou 12, dans lequel la solution de la composition solide (C) est appliquée au produit frais par pulvérisation, arrosage, aspersion, trempage ou immersion.

14. Procédé selon l'une des revendications 11 à 13, dans lequel la solution de la composition solide (C) est appliquée à des fruits et légumes frais, comprenant les pommes, les poires, les pommes de terre, les carottes, la laitue, les avocats, les poireaux, la rhubarbe, les oignons, le basilic, les melons, l'ananas, l'aubergine, le rutabaga, le chou frisé, les cerises, les fraises, les champignons, les nectarines, les pêches, le kiwi, l'ail, les poivrons, les tomates, le fenouil, les citrons, les oranges, les abricots, les asperges, les haricots, les pois, le brocoli, le chou-fleur, les choux de Bruxelles, le chou pommé, le céleri, la bette à cardes, le maïs, l'endive, les fines herbes, l'okra, le fruit du dragon, le persil, le piment chili, la betterave, le navet, le gingembre, le radis, les courges, la courgette, la citrouille, l'artichaut, la patate douce, la courgette zucchini et le cresson de fontaine.

15. Produit frais, conservé par application de la solution selon l'une des revendications 5 à 8 ou par le procédé selon l'une des revendications 11 à 14, où le produit frais est choisi dans le groupe constitué des pommes, des poires, des pommes de terre, des carottes, de la laitue, des avocats, des poireaux, de la rhubarbe, des oignons, du basilic, des melons, de l'ananas, de l'aubergine, du rutabaga, du chou frisé, des cerises, des fraises, des champignons, des nectarines, des pêches, du kiwi, de l'ail, des poivrons, des tomates, du fenouil, des citrons, des oranges, des abricots, des asperges, des haricots, des pois, du brocoli, du chou-fleur, des choux de Bruxelles, du chou pommé, du céleri, de la bette à cardes, du maïs, de l'endive, des fines herbes, de l'okra, du fruit du dragon, du persil, du piment chili, de la betterave, du navet, du gingembre, du radis, des courges, de la courgette, de la citrouille, de l'artichaut, de la patate douce, de la courgette et du cresson de fontaine.

FIGURES

FIG. 1

**REFERENCES CITED IN THE DESCRIPTION**

**Patent documents cited in the description**

- WO 2005023022 A1
- EP 1659887 A
- JP 6181684 A
- EP 0141875 A
- WO 0030460 A
- CN 103976017 A
- US 5236617 A
- JP S5561914 A
- EP 2522226 A2
- US 2012045555 A1
- KR 20130141017
- CN 103976017
- JP 5561914 B